# EUROPEAN PATENT SPECIFICATION

(11) **EP 1 908 677 B1**
(45) Date of publication and mention of the grant of the patent: **22.02.2012**
(21) Application number: 07253680.8
(22) Date of filing: 17.09.2007
(51) Int. Cl.: B62J 99/00, B60K 35/00

(54) **Meter device and vehicle**
Messvorrichtung und Fahrzeug
Dispositif de compteur et véhicule

(30) Priority: 29.09.2006 JP 2006270001
(43) Date of publication of application: 09.04.2008
(73) Proprietor: Yamaha Hatsudoki Kabushiki Kaisha, Iwata-shi, Shizuoka-ken 438-8501 (JP)
(72) Inventor: Suita, Yoshikazu, Bangsaothong Sub-District Samutprakarn 10540 (TH); Worakasemsuk, Pairuch, Bangsaothong Sub-District Samutprakarn 10540 (TH)
(74) Representative: Moreland, David

(56) References cited:
- EP-A- 0 732 679
- EP-A- 1 340 673
- WO-A-2006/027134

## Description

### FIELD OF THE INVENTION

The present invention relates to a meter device including an indication plate having an indication surface which indicates information concerning a measured amount, and a finger or pointer moving in an area above the indication plate, and also relates to a vehicle having a meter device.

### BACKGROUND TO THE INVENTION

Conventionally, vehicles such as, for example, motorcycles have a meter device indicative of a measured amount, such as, for example, a speedometer indicative of a running speed. Also, a manner for shining or illuminating a rim part of the meter panel is widely used for an analog indication type meter device, i.e., for a meter device that indicates a measured amount by a finger moving in an area above a meter panel which indicates information concerning the measured amount (for example, running speed) to enhance visibility of the meter device.

For example, a manner is known for enhancing the visibility of a meter device, particularly, easiness of discrimination from other meter devices or the like by providing a light guiding plate which guides light from a light source onto a rim part of the meter panel. Such an arrangement is disclosed in, for example, JP-A-2004-340871.

However, the manner for enhancing the visibility of a conventional meter device, such as described above, has the following problem. That is, there is further room for improving the enhancement of the visibility, specifically, the enhancement of the easiness of the discrimination from other meter devices or the like.

An example of a meter device is described by W02006/027134, which describes a measuring instrument having a graduated scale and a light source for illuminating the scale. The scale comprises at least one scale ring that is not permeable to light and which is provided with openings. At least one light guide is provided. The light guide is located on a back surface of the scale ring. Ends of the light guide extend at least as far as the lower end of the through openings and may partially extend into and/or through the through openings. Light from the light source is injected into the light guide and the ends emit the light.

Another example of a meter device is described by EP0732679, which describes a display panel of a speedometer that includes a light guide, a light source, a transparent sheet and a pointer. A masking is printed on the transparent sheet. Notches are defined by the masking so as to form shining parts. The light guide is formed in a disk shape, which corresponds to the disk shape of the transparent sheet. The light guide has a centre portion of uniform thickness and a tapered peripheral portion.

It is an object of the present invention to provide a meter device that can enhance the visibility thereof, particularly, the easiness of the discrimination from other meter devices or the like, and also to provide a vehicle having such a meter device.

### SUMMARY OF THE INVENTION

According to a first aspect of the present invention, there is provided a meter device comprising:
an indication plate having an indication surface which indicates information concerning a measured amount;
a light source; and
an indication plate frame for surrounding at least a portion of a rim part of the indication plate,
wherein the indication plate frame is at least partially formed from a light guiding member to guide light from the light source, and
the indication plate frame protrudes over the indication surface from a back side of the indication plate toward a front side thereof.

The meter device may further comprise a finger adapted to move in an area above the indication surface of the indication plate.

The meter device may further comprise a projecting scale section projecting from the indication plate frame toward the front side of the indication plate, wherein the projecting scale section is formed at a specific position corresponding to the measured amount. The projecting scale section may project inward from the rim part of the indication plate.

A plurality of the projecting scale sections may be provided, and at least one projecting scale section may be formed at a position corresponding to a reference value of the measured amount. The at least one projecting scale section formed at a position corresponding to a reference value of the measured amount may be of a different size than the remaining projecting scale sections. The at least one projecting scale section may be larger than the remaining projecting scale sections.

The indication plate frame may include:
a frame inner end formed on the rim part side;
a frame outer end formed out of the frame inner end; and
a frame inclination section formed between the frame inner end and the frame outer end.

The frame outer end may be positioned more forward than the frame inner end on the front side of the indication plate.

Each projecting scale section may include:
a scale section inner end formed on the rim part side;
a scale section outer end formed out of the scale section inner end; and
a scale section inclination part formed between the scale section inner end and the scale section outer end.

The scale section outer end may be positioned more forward than the scale section inner end on the front side of the indication plate.

The finger may be formed from a light guiding member to guide light from the light source or another light source.

The meter device may further comprise:
an outer frame surrounding at least a portion of the indication plate frame outside, wherein the outer frame is treated to reflect light.

The meter device of the present invention may be juxtaposed with an other meter device, and the other meter device does not include an indication plate frame.

According to a second aspect of the present invention there is provided a meter device including an indication plate having an indication surface which indicates information concerning a measured amount, and a finger moving in an area above the indication plate, has a light source, and an indication plate frame for surrounding at least a portion of a rim part of the indication plate, wherein the indication plate frame is formed from a light guiding member or material (for example, made of acrylic resin) which guides light from the light source, and the indication plate frame protrudes over the indication surface from a back side of the indication plate toward a front side thereof.

According to the meter device described above, the indication plate frame surrounding at least the portion of the rim part of the indication plate and formed from the light guiding member protrudes over the indication surface from the back side of the indication plate toward the front side thereof.

By shining the indication plate frame protruding over the indication surface from the back side of the indication plate toward the front side thereof, the meter device is more solidly visible.

The indication plate frame may have a projecting scale section projecting toward the front side of the indication plate, and the projecting scale section may be formed at a specific position corresponding to the measured amount.

The projecting scale section may project from the rim part to an inner side in the area above the indication plate.

The indication plate frame may have a plurality of the projecting scale sections, and a size of the projecting scale section that is formed at a position corresponding to a reference value of the measured amount may be greater than respective sizes of the remainder projecting scale sections.

The indication plate frame may have a frame inner end formed in the rim part side, a frame outer end formed out of the frame inner end, and a frame inclination section (formed between the frame inner end and the frame outer end.

The frame outer end may be positioned more forward than the frame inner end on the front side of the indication plate.

Each projecting scale section may have a scale section inner end formed in the rim part side, a scale section outer end formed out of the scale section inner end, and a scale section inclination part formed between the scale section inner end and the scale section outer end.

The scale section outer end may be positioned more forward than the scale section inner end on the front side of the indication plate.

The finger may be formed from a light guiding member to guide light from the light source or another light source.

The meter device may further include an outer frame surrounding at least a portion of the indication plate frame outside. The outer frame may be treated (for example, plated) to reflect light.

The meter device may be juxtaposed with another meter device, and only the meter device has the indication plate frame.

According to a third aspect of the present invention, there is provided a vehicle including a meter device according to the first or second aspects.

According to the features of the present invention, a meter device that can further enhance the visibility, particularly, the easiness of the discrimination from other meter devices or the like, and also a vehicle having such a meter device can be provided.

### BRIEF DESCRIPTION OF THE DRAWINGS

These and other aspects of the present invention will now be described, by way of example only, with reference to the accompanying drawings, in which:
FIG. 1 is a left side elevational view of a vehicle according to an embodiment of the present invention;
FIG. 2 is a partial, enlarged, side elevational view of a combination meter unit according to an embodiment of the present invention and the vicinity of the combination meter unit;
FIG. 3 is a plan view of the combination meter unit according to the embodiment of the present invention and the vicinity of the combination meter unit;
FIG. 4 is a plan view of the combination meter unit according to the embodiment of the present invention;
FIG. 5 is a cross sectional view of the combination meter unit, taken along the line F5-F5, shown in FIG. 4;
FIG. 6 is an exploded perspective view of an indication plate and an indication plate frame according to the embodiment of the present invention;
FIG. 7 is a partially sectioned perspective view of the indication plate frame according to the embodiment of the present invention;
FIG. 8 is an explanatory view for explaining a situation in which the light from a light source according to the embodiment of the present invention shines a finger;
FIG. 9 is a cross sectional view of the indication plate frame, taken along the line F9-F9, shown in FIG. 6;
FIG. 10 is a cross sectional view of the light guide, taken along the line F10-F10, shown in FIG. 6;
FIG. 11 is a plan view of an indication plate frame according to variations of the present invention; and
FIG. 12 is a plan view of an indication plate frame according to a further variation of the present invention.

### DETAILED DESCRIPTION OF THE DRAWINGS

With reference to drawings, an embodiment of a vehicle according to the present invention will now be described. In the descriptions of the drawings, the same or similar portions are assigned with the same or similar reference numerals and symbols. However, it should be noted that the drawings are schematic and that for example ratios between respective dimensions are different from actual ones Accordingly, specific dimensions or the like should be decided in consideration of the following descriptions. Also, it is a matter of course that mutual dimensional relationships or ratios can be different from each other between the respective drawings.

### (1) Overall Structure

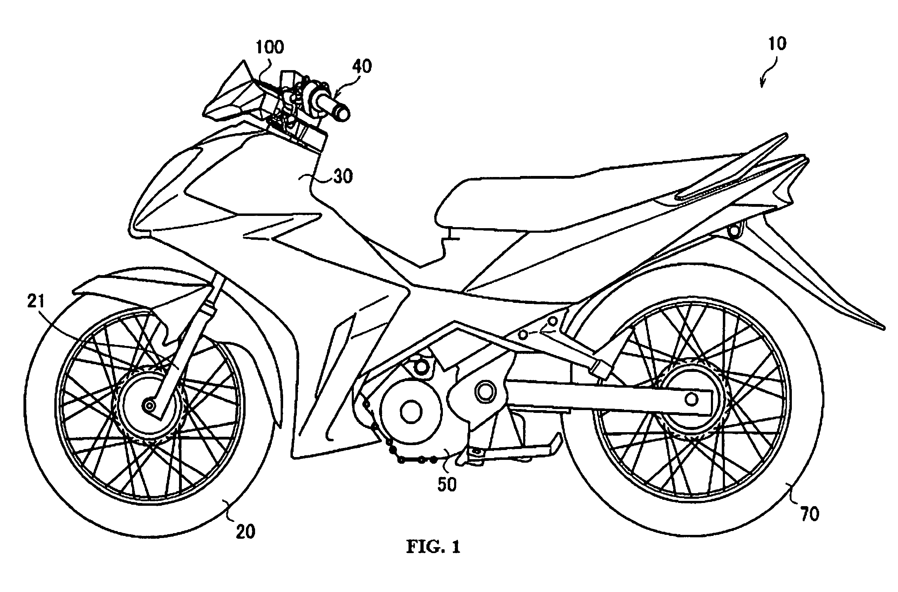

FIG. 1 is a left side elevational view of a motorcycle 10 according to an embodiment of the present invention. As shown in FIG. 1, the motorcycle 10 is a so-called under-bone type motorcycle that has a body frame (not shown) positioned lower in comparison with a general straddle type motorcycle.

The motorcycle 10 has a front wheel 20 and a rear wheel 70. The rear wheel 70 is driven by the power generated by an engine 50.

The motorcycle 10 has a right and left pair of front forks 21 supporting the front wheel 20 for rotation. Specifically, the front forks 21 allow the front wheel 20 to move (linear motion) in a vertical direction (actually, a direction defined with a certain caster angle) in accordance with variations of road conditions to absorb shocks which the front wheel 20 has received.

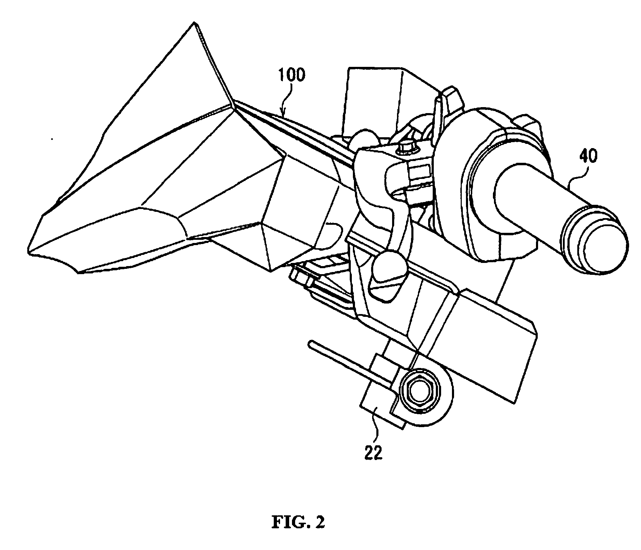

The motorcycle 10 has a front cowling 30 for covering a portion of the front forks 21 and a steering shaft 22 (not shown in FIG. 1, see FIG. 2). A handle bar unit 40 operated by a rider to change a direction of the front wheel 20 and a combination meter unit 100 are disposed above the front cowling 30.

### (2) Structure of Meter Device

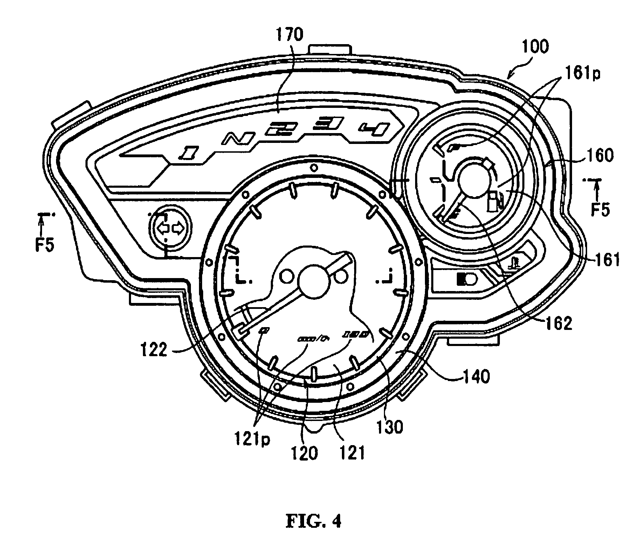

The structure of a meter device according to an embodiment of the present invention will now be described. Specifically, a structure of a combination meter unit 100 and a minute structure of a speedometer 120 (see FIG. 4) constructing the meter device in this embodiment will be described.

### (2.1) Structure of Combination Meter Unit

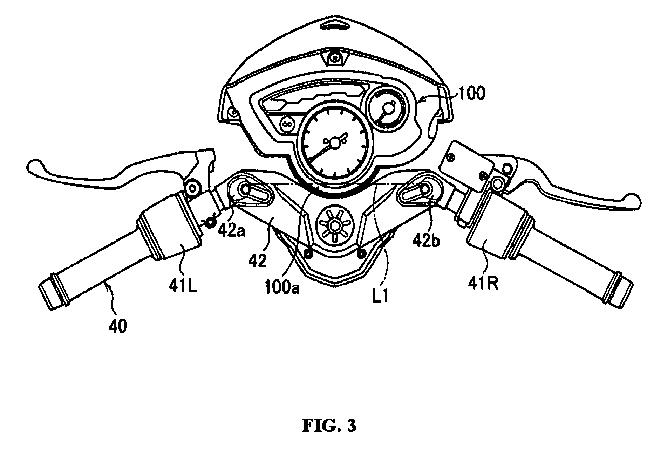

FIG. 2 is a partial, enlarged, side elevational view of the combination meter unit 100 and the vicinity of the combination meter unit 100. FIG. 3 is a plan view of the combination meter unit 100 and the vicinity of the combination meter unit 100.

The combination meter unit 100 is disposed in front of the handle bar unit 40. The combination meter unit 100 is fixed to the steering shaft 22 coupled with the front forks 21 (see FIG. 1).

The handle bar unit 40 is configured with a left side handle bar 41L positioned on the left side, a right side handle bar 41R positioned on the right side and a handle crown 42 coupled with the steering shaft 22. The left side handle bar 41L and the right side handle bar 41R are coupled with the handle crown 42. Specifically, the left side handle bar 41L is coupled with a left side handle bar coupling section 42a. Also, the right side handle bar 41R is coupled with a right side handle bar coupling section 42b.

The handle crown 42 curves along the combination meter unit 100. Specifically, the handle crown 42 curves along a bottom end portion 100a of the combination meter unit 100. Therefore, the bottom end portion 100a is positioned to enter an area of the handle crown 42 beyond a line L1 passing the left side handle bar coupling section 42a and the right side handle bar coupling section 42b.

FIG. 4 is a plan view of the combination meter unit 100. As shown in FIG. 4, the combination meter unit 100 includes a speedometer 120, a fuel meter 160 and a shift indicator 170.

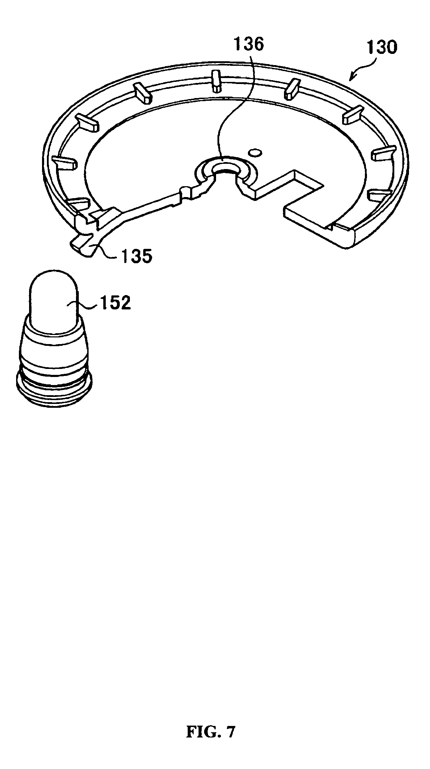

The speedometer 120 is an analog indication type speedometer and includes a meter panel 121 (indication plate) and a finger or pointer 122. The finger 122 moves in an area above the meter panel 121 to indicate a running speed of the motorcycle 10. The finger 122 is formed from a light guiding member which guides light of a light source, specifically, the light of the finger lighting lamp 152 (not shown in FIG. 4, see FIG. 7). In this embodiment, the finger 122 is made from acrylic resin.

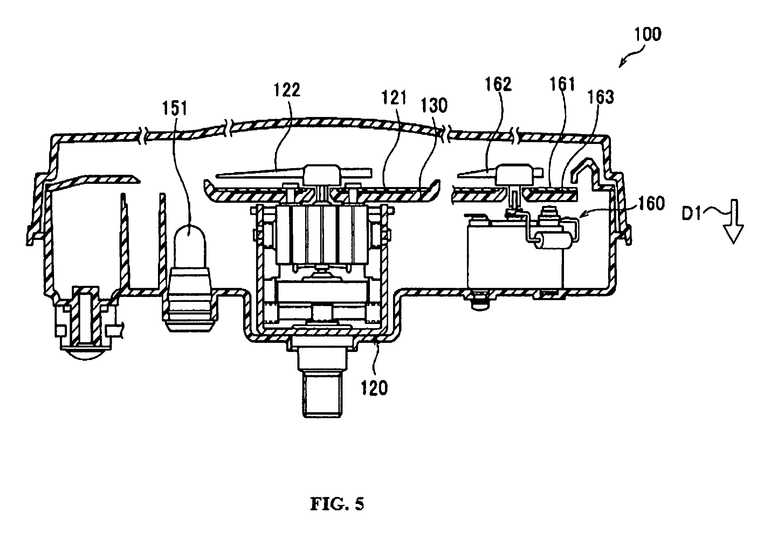

The meter panel 121 has a light permeable part 121p (alphanumeric part such as, for example, "0," "180" and " km/h) which allows the light from the light source, specifically, from the meter lamp 151 (not shown in FIG. 4, see FIG. 5) to pass therethrough. The permeable part 121p is printed with light-permeable ink. Alternatively, the permeable part 121p can be formed in such a manner that non-light-permeable ink is applied to the meter panel 121 and then the ink is removed in accordance with certain alphanumeric shapes to obtain the permeable part 121p.

The meter panel 121 is positioned on a light guide 130. The light guide 130 is formed from a light guiding member to guide the light from the meter lamp 151 (see FIG. 5). In this embodiment, the light guide 130 is made from acrylic resin. Also, the light guide 130 is colored tangerine.

Also, in this embodiment, a reflector ring 140 (outer frame) is provided and surrounds the light guide 130. The reflector ring 140 is treated, specifically plated, to reflect light.

A fuel meter 160 (one of other meters, see FIG. 4) has a meter panel 161 and a finger 162 to indicate an amount of fuel present in a fuel tank (not shown) of the motorcycle 10. The meter panel 161 is similar to the meter panel 121 and has a permeable part 161p ("F," an icon for fuel or the like) which allows light to pass therethrough.

The fuel meter 160 is positioned at a diagonally right upper location of the speedometer 120 and next to the speedometer 120. The diameter of the fuel meter 160 is smaller than the diameter of the speedometer 120.

A shift indicator 170 is provided which indicates a selected transmission gear position (or neutral position).

FIG. 5 is a cross sectional view of the combination meter unit 100, taken along the line F5-F5 shown in FIG. 4. As shown in FIG. 5, the speedometer 120 has the meter panel 121 and the finger 122. The light guide 130 is placed under the meter panel 121.

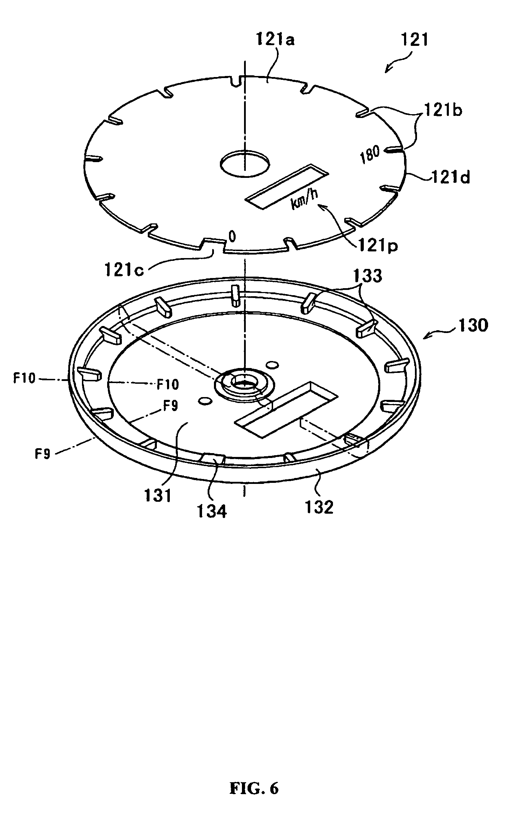

The light guide 130 guides the light from the meter lamp 151. The guided light shines the vicinity of the rim part 121d (FIG. 6) and the permeable part 121p of the meter panel 121.

In the cross section taken along the line F5-F5, the fuel meter 160 is juxtaposed with the speedometer 120. That is, the finger 122 and the finger 162 are generally positioned at the same level in a depth direction (D1 direction in the figure). Also, a light guide 163 for guiding light to the permeable part 161p (see FIG. 4) from a lamp (not shown) is placed under the meter panel 161.

The light guide 163 is positioned just under the meter panel 161. Dissimilarly to the light guide 130, the light guide 163 does not extend beyond the periphery of the meter panel 121.

### (2.2) Detailed Structure of Meter Device

The detailed structure of the meter device according to this embodiment, i.e., the speedometer 120 will now be described.

### (2.2.1) Configurations of Indication Plate and Indication Plate Frame

FIG. 6 is an exploded perspective view of the meter panel 121 that forms the indication plate in this embodiment and of the light guide 130 that forms the indication plate frame in this embodiment.

As shown in FIG. 6, the meter panel 121 has an indication surface 121a indicating a running speed or the like. Specifically, the permeable part 121p forms alphanumeric portions ("0," "180" " etc.) indicating the running speed or the like. Only some of the alphanumeric portions indicating the running speed or the like are shown in FIG. 6.

The meter panel 121 has notches 121b and a notch 121c engaging with scale projections 133 and a reference scale projection 134, respectively, which are formed on the light guide 130.

The light guide 130 is disposed under the meter panel 121. The light guide 130 surrounds the rim part 121d of the meter panel 121.

The light guide 130 has a generally disk-shaped bottom plate section 131 and a rim frame section 132 extending from the rim of the bottom plate section 131 toward the meter panel 121 so as to surround the meter panel 121.

The light guide 130 has the scale projections 133 projecting inward from the rim part 121d of the meter panel 121 in an area above the meter panel 121 and the reference scale projection 134. In this embodiment, the scale projections 133 and the reference scale projection 134 form projecting scale section(s). The scale projections 133 and the reference scale projection 134 project toward the front side of the meter panel 121.

The scale projections 133 are formed at specific positions corresponding to running speeds (for example, 20km/h, 40km/h etc.). The reference scale projection 134 is formed at a position where the finger 122 points when a reference running speed is given, specifically, when the running speed of the motorcycle 10 is 0km/h.

That is, the light guide 130 has a plurality of the scale projections 133. A reference value of the measured amount, specifically, a width of the reference scale projection 134 formed at the location corresponding to the reference running speed (0km/h) is longer than a width of each scale projection 133.

### (2.2.2) Finger Illuminating Function

FIG. 7 is a partially sectioned perspective view of the light guide 130. The light guide 130 is also used for guiding the light to the finger 122 from the light source. As shown in FIG. 7, a light introducing section 135 and a light emitting section 136 are defined in the light guide 130.

The light introducing section 135 introduces the light from the finger lighting lamp 152. The light of the finger lighting lamp 152 introduced by the light introducing section 135 is guided to the light emitting section 136. The light emitting section 136 emits the light from the finger lighting lamp 152.

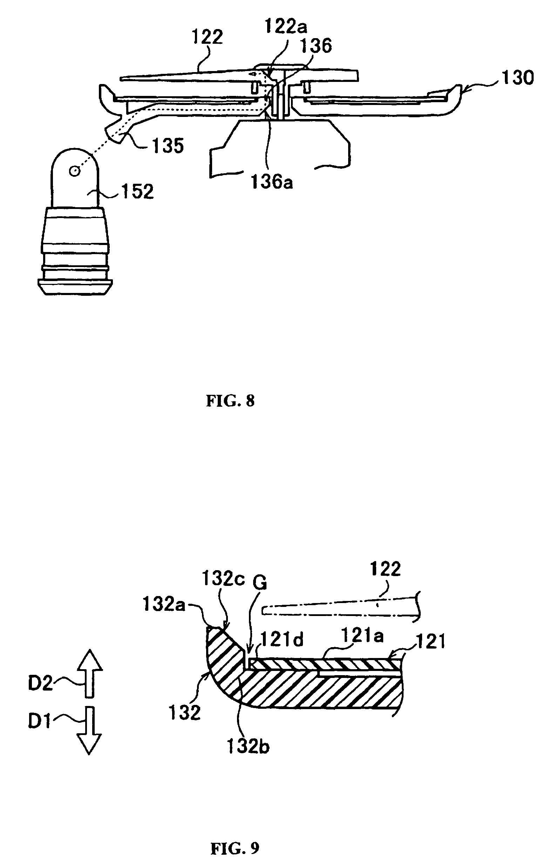

FIG. 8 is an explanatory view for explaining a situation in which the light from the finger lighting lamp 152 shines the finger 122. Additionally, the hatching expression of cross sections is omitted in FIG. 8. As shown in FIG. 8, an inclination part 136a which reflects the light (indicated by the dotted line) from the finger lighting lamp 152 upward, i.e., toward the finger 122 is formed at the light emitting section 136.

Also, an inclination part 122a which reflects the light from the finger lighting lamp 152 toward a tip end side of the finger 122 is formed in the finger 122.

### (2.2.3) Detailed Configuration of Rim Frame Section

The detailed configuration of the rim frame section 132 of the light guide 130 will now be described. FIG. 9 is a cross sectional view of the light guide 130, taken along the line F9-F9, shown in FIG. 6.

As shown in FIG. 9, the light guide 130, specifically, the rim frame section 132, protrudes over the indication surface 121a from the back side (D1 direction side in the figure) of the meter panel 121 toward the front side (D2 direction side in the figure) thereof.

The rim frame section 132 has an outer end 132a (frame outer end), an inner end 132b (frame inner end) and an inclination section 132c (frame inclination section).

The inner end 132b is formed on the rim part 121d side of the meter panel 121. The outer end 132a is formed out of the inner end 132b. Also, in this embodiment, the outer end 132a is positioned more forward than the inner end 132b on the front side. The inclination section 132c is formed between the inner end 132b and the outer end 132a. That is, the rim frame section 132 has a mortar shape that descends from the outer end 132a toward the inner end 132b.

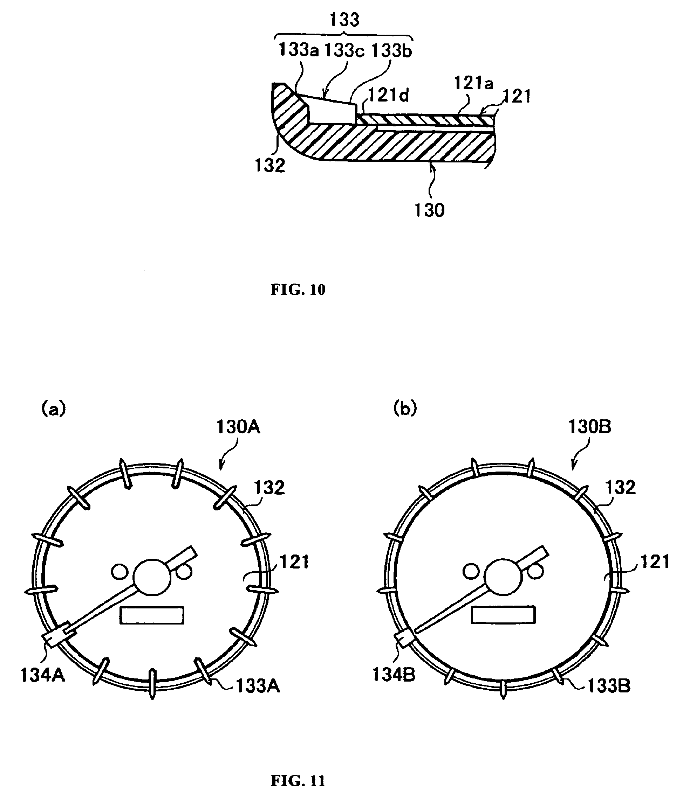

FIG. 10 is a cross sectional view of the light guide 130 taken along the line F10-F10 shown in FIG. 6. As shown in FIG. 10, each scale projection 133 has an outer end 133a (scale section outer end), an inner end 133b (scale section inner end) and an inclination part 133c (scale section inclination part).

The inner end 133b is formed on the rim part 121d side of the meter panel 121. The outer end 133a is formed outwardly of the inner end 133b. Also, in this embodiment, the outer end 132a is positioned more forward than the inner end 132b on the front side. The inclination part 133c is formed between the inner end 133b and the outer end 133a. That is, each scale projection 133 has a shape that descends from the outer end 133a toward the inner end 133b.

Additionally, although not shown, the reference scale projection 134 has a lateral shape similar to that of the scale projection 133.

According to the combination meter unit 100, specifically the speedometer 120, the light guide 130 surrounding the rim part 121d of the meter panel 121 and made from acrylic resin protrudes over the indication surface 121a of the meter panel 121 from the back side of the meter panel 121 toward the front side thereof.

Because the meter lamp 151 shines the light guide 130 that protrudes over the indication surface 121a from the back side of the meter panel 121 toward the front side thereof, the speedometer 120 is more solidly visible. That is, the visibility of the speedometer 120, particularly, the easiness of the discrimination from the fuel meter 160 and the shift indicator 170 can be further enhanced.

Also, because the light guide 130 protrudes over the indication surface 121a of the light guide 130, the speedometer 120 is more solidly visible even though the meter lamp 151 does not shine the light guide.

In this embodiment, the light guide 130 has the scale projections 133 and the reference scale projection 134 which project inward of the meter panel 121 from the rim part 121d of the meter panel 121. Because the meter lamp 151 shines the scale projections 133 and the reference scale projection 134, the visibility of the speedometer 120, specifically, the situation in which the finger 122 points a specific running speed (20km/h, 40km/h etc.) can be easily seen by the rider.

Further, the width of the reference scale projection 134 formed at the location of "0km/h" is larger than the width of each scale projection 133. Therefore, the rider can easily recognize the reference position of the finger 122.

In this embodiment, the rim frame section 132 has the inclination section 132c that descends from the outer end 132a toward the inner end 132b. That is, the rim frame section 132 has a mortar shape. Therefore, the light is scattered toward the front side in the inclination section 132c. The speedometer 120 thus is more solidly visible.

Also, because the rim frame section 132 has a mortar shape, a gap G between the meter panel 121 and the rim frame section 132 can be inconspicuous, as shown in FIG. 9. Further, because the rim frame section 132 has a mortar shape, the meter panel 121 having the notches 121b, 121c and the light guide 130 having the scale projections 133 and the reference scale projection 134 can be easily assembled with each other.

Each scale projection 133 (including the reference scale projection 134) has the inclination part 133c that descends from the outer end 133a toward the inner end 133b. Therefore, the light is scattered toward the front side in the inclination part 133c. The speedometer 120 thus is more solidly visible.

In this embodiment, the finger 122 is also formed from the light guiding member, specifically, made from the acrylic resin. Also, because the plated reflector ring 140 (FIG. 4) surrounds the light guide 130 externally in this embodiment, a wide area including the outside of the light guide 130 surrounding the meter panel 121 can be shined. That is, the visibility of the speedometer 120 can be further enhanced.

### Other Embodiments

Although the substance of the present invention is disclosed through the one embodiment described above, the descriptions and drawings forming a portion of this disclosure should not be recognized to limit the present invention. Persons skilled in the art can reveal various alternative embodiments from this disclosure.

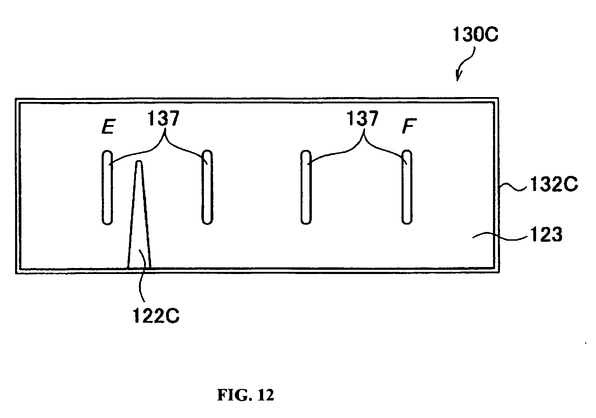

For example, the configuration of the light guide 130 can be changed to those shown in FIG. 11 (a) and (b) and FIG. 12. A light guide 130A shown in FIG. 11(a) and a light guide 130B shown in FIG. 11(b) have different rim frame sections.

The light guide 130A shown in FIG. 11(a) has scale sections 133A and a reference scale section 134A each extending outward and inward from a rim frame section 132. The light guide 130B shown in FIG. 11(b) has scale projections 133B and a reference scale projection 134B each extending outward from a rim frame section 132. The scale sections 133A, the scale projections 133B, the reference scale section 134A and the reference scale projection 134B project toward the front side of the meter panel 121.

FIG. 12 shows another variation of the light guide 130. A light guide 130C shown in FIG. 12 is not circularly shaped but has a rectangular shape. A finger 122C does not rotate as the finger 122 but moves parallel in a longitudinal direction of the meter panel 123.

The light guide 130C has an outer frame section 132C. Also, the light guide 130C has a plurality of scale sections 137. The scale sections 137 do not contact with the outer frame section 132C and are formed at certain positions corresponding to indication amounts (for example, fuel). The scale sections 137 project toward the front side of the meter panel 121.

The finger 122 and the light guide 130 are made from acrylic resin in the embodiment described above. The finger 122 or the light guide 130, however, can be made from materials other than the acrylic resin, for example, polycarbonate resin, ABS resin, polyethylene terephthalate (PET) or glass. That is, the materials used for making the finger 122 or the light guide 130 are only required to be light-permeable and have refraction rate higher than that of air.

Although the finger 122 is also formed from the light guiding member in the embodiment described above, the finger is not necessarily formed from the light guiding member.

In the embodiment described above, the light guide 130 (rim frame section 132) and the reflector ring 140 are placed over the whole region of the rim part 121d of the meter panel 121. However, the light guide 130 (rim frame section 132) and the reflector ring 140 are not necessarily placed all over the whole region of the rim part 121d of the meter panel 121. Also, the reflector ring 140 is not necessarily provided.

In the embodiment described above, the inclination section 132c whose outer end 132a is positioned more forward than the inner end 132b on the front side and the inclination section 133c whose outer end 133a is positioned more forward than the inner end 133b on the front side are formed. However, the inner end 132b or the inner end 133b can be positioned more forward on the front side. Also, the inclination section 132c, the inclination section 133c, the scale projections 133 or the reference scale projection 134 are not necessarily formed.

Further, in the embodiment described above, the width of the reference scale projection 134 is longer than the width of each scale projection 133. However, the length of the reference scale projection 134 can be longer or shorter than the length of the scale projection 133. Otherwise, the height of the reference scale projection 134 can be higher or lower than the height of the scale projection 133.

Although the motorcycle 10 is described as an example in the embodiment described above, the present invention can be applied to vehicles other than motorcycles, for example, vehicles such as automobiles or the like having a meter device.

As thus described, it is a matter of course that the present invention covers various embodiments or the like which are not described herein. Accordingly, the technical scope of the present invention can be decided by only the invention identifying items according to Claims which are appropriate in view of the above descriptions.

### Description of Reference Numerals and Symbols

- 10:: motorcycle
- 20:: front wheel
- 21:: front fork
- 22:: steering shaft
- 30:: front cowling
- 40:: handle bar unit
- 41L:: left side handle bar
- 41R:: right side handle bar
- 42:: handle crown
- 42a:: left side handle coupling section
- 42b:: right side handle coupling section
- 50:: engine
- 70:: rear wheel
- 100:: combination meter unit
- 100a:: bottom end portion
- 120:: speedometer
- 121:: meter panel
- 121a:: indication surface
- 121b, 121c:: notch
- 121d:: rim part
- 121p:: permeable part
- 122, 122C:: finger
- 122a:: inclination part
- 123:: meter panel
- 130, 130A-130C:: light guide
- 131:: bottom plate section
- 132, 132C:: rim frame section
- 132a:: outer end
- 132b:: inner end
- 132c:: inclination section
- 133, 133B:: scale projection
- 133A:: scale section
- 133a:: outer end
- 133b:: inner end
- 133c:: inclination section
- 134, 134B:: reference scale projection
- 134A:: reference scale section
- 135:: light introducing section
- 136:: light emitting section
- 136a:: inclination part
- 137:: scale section
- 140:: reflector ring
- 151:: meter lamp
- 152:: finger lighting lamp
- 160:: fuel meter
- 161:: meter panel
- 161p:: permeable part
- 162:: finger
- 163:: light guide
- 170:: shift indicator
- G:: gap
- L1:: line

## Claims

1. A meter device (120) comprising:
an indication plate (121) having an indication surface (121a) which indicates information concerning a measured amount;
a light source (151); and
an indication plate frame (130) for surrounding at least a portion of a rim part (121d) of the indication plate (121),
wherein the indication plate frame (130) is at least partially formed from a light guiding material to guide light from the light source (151), and
the indication plate frame (130) protrudes over the indication surface (121a) from a back side of the indication plate (121) toward a front side thereof.

2. The meter device (120) according to Claim 1, further comprising a finger (122) adapted to move in an area above the indication surface (121a) of the indication plate (121).

3. The meter device (120) according to Claim 1 or 2, further comprising a projecting scale section (133, 134) projecting from the indication plate frame (130) toward the front side of the indication plate (121), wherein the projecting scale section (133, 134) is formed at a specific position corresponding to the measured amount.

4. The meter device (120) according to Claim 3, wherein the projecting scale section (133, 134) projects inward from the rim part (121d) of the indication plate (121).

5. The meter device (120) according to Claim 3 or 4, wherein a plurality of the projecting scale sections (133, 134) are provided, and at least one projecting scale section (134) is formed at a position corresponding to a reference value of the measured amount.

6. The meter device (120) according to Claim 5, wherein the at least one projecting scale section (134) formed at a position corresponding to a reference value of the measured amount is of a different size than the remaining projecting scale sections (133).

7. The meter device (120) according to Claim 5 or 6, wherein the at least one projecting scale section (134) formed at a position corresponding to a reference value of the measured amount is larger than the remaining projecting scale sections (133).

8. The meter device (120) according to any preceding Claim, wherein the indication plate frame (130) includes:
a frame inner end (132b) formed on the rim part side;
a frame outer end (132a) formed outwardly of the frame inner end (132b); and
a frame inclination section (132c) formed between the frame inner end (132b) and the frame outer end (132a).

9. The meter device (120) according to Claim 8, wherein the frame outer end (132a) is positioned more forward than the frame inner end (132b) on the front side of the indication plate (121).

10. The meter device (120) according to any one of Claims 3 to 9, wherein each projecting scale section (133, 134) includes:
a scale section inner end (133b) formed on the rim part side;
a scale section outer end (133a) formed outwardly of the scale section inner end (133b); and
a scale section inclination part (133c) formed between the scale section inner end (133b) and the scale section outer end (133a).

11. The meter device (120) according to Claim 10, wherein the scale section outer end (133a) is positioned more forward than the scale section inner end (133b) on the front side of the indication plate (121).

12. The meter device (120) according to any one of Claims 2 to 11, wherein the finger (122) is formed from a light guiding material to guide light from the light source (151) or another light source (152).

13. The meter device (120) according to any preceding Claim, further comprising:
an outer frame (140) surrounding at least an outer portion of the indication plate frame (130), wherein the outer frame (140) is treated to reflect light.

14. The meter device (120) according to any preceding Claim, wherein the meter device (120) is juxtaposed with an other meter device, and the other meter device does not include an indication plate frame.

15. A vehicle (10) comprising a meter device (120) according to any one of Claims 1 to 14.

## Patentansprüche

1. Messvorrichtung (120), die aufweist:
eine Anzeigescheibe (121) mit einer Anzeigefläche (121a), die eine Information betreffs einer gemessenen Größe anzeigt;
eine Lichtquelle (151); und
einen Anzeigescheibenrahmen (130) für das Umgeben von mindestens einem Abschnitt eines Randabschnittes (121d) der Anzeigescheibe (121),
wobei der Anzeigescheibenrahmen (130) mindestens teilweise aus einem lichtleitenden Material gebildet wird, um Licht von der Lichtquelle (151) zu leiten, und
wobei der Anzeigescheibenrahmen (130) über die Anzeigefläche (121 a) von einer Rückseite der Anzeigescheibe (121) in Richtung einer Vorderseite davon vorsteht.

2. Messvorrichtung (120) nach Anspruch 1, die außerdem einen Zeiger (122) aufweist, der ausgebildet ist, um sich in einem Bereich über der Anzeigefläche (121a) der Anzeigescheibe (121) zu bewegen.

3. Messvorrichtung (120) nach Anspruch 1 oder 2, die außerdem einen vorspringenden Skalenabschnitt (133, 134) aufweist, der aus dem Anzeigescheibenrahmen (130) in Richtung der Vorderseite der Anzeigescheibe (121) vorspringt, wobei der vorspringende Skalenabschnitt (133, 134) in einer spezifischen Position entsprechend der gemessenen Größe ausgebildet ist.

4. Messvorrichtung (120) nach Anspruch 3, bei der der vorspringende Skalenabschnitt (133, 134) nach innen vom Randabschnitt (121d) der Anzeigescheibe (121) vorspringt.

5. Messvorrichtung (120) nach Anspruch 3 oder 4, bei der eine Vielzahl von vorspringenden Skalenabschnitten (133, 134) vorhanden ist und mindestens ein vorspringender Skalenabschnitt (134) in einer Position entsprechend einem Bezugswert der gemessenen Größe ausgebildet ist.

6. Messvorrichtung (120) nach Anspruch 5, bei der der mindestens eine vorspringende Skalenabschnitt (134), der in einer Position entsprechend einem Bezugswert der gemessenen Größe ausgebildet ist, eine andere Größe aufweist als die restlichen vorspringenden Skalenabschnitte (133).

7. Messvorrichtung (120) nach Anspruch 5 oder 6, bei der der mindestens eine vorspringende Skalenabschnitt (134), der in einer Position entsprechend einem Bezugswert der gemessenen Größe ausgebildet ist, größer ist als die restlichen vorspringenden Skalenabschnitte (133).

8. Messvorrichtung (120) nach einem der vorhergehenden Ansprüche, bei der der Anzeigescheibenrahmen (130) umfasst:
ein inneres Ende (132b) des Rahmens, das auf der Seite des Randabschnittes ausgebildet ist;
ein äußeres Ende (132a) des Rahmens, das nach außen vom inneren Ende (132b) des Rahmens ausgebildet ist; und
einen Rahmenneigungsabschnitt (132c), der zwischen dem inneren Ende (132b) des Rahmens und dem äußeren Ende (132a) des Rahmens ausgebildet ist.

9. Messvorrichtung (120) nach Anspruch 8, bei der das äußere Ende (132a) des Rahmens weiter vom als das innere Ende (132b) des Rahmens auf der Vorderseite der Anzeigescheibe (121) positioniert ist.

10. Messvorrichtung (120) nach einem der Ansprüche 3 bis 9, bei der ein jeder vorspringende Skalenabschnitt (133, 134) umfasst:
ein inneres Ende (133b) des Skalenabschnittes, das auf der Seite des Randabschnittes ausgebildet ist;
ein äußeres Ende (133a) des Skalenabschnittes, das nach außen vom inneren Ende (133b) des Skalenabschnittes ausgebildet ist; und
einen Neigungsabschnitt (133c) des Skalenabschnittes, der zwischen dem inneren Ende (133b) des Skalenabschnittes und dem äußeren Ende (133a) des Skalenabschnittes ausgebildet ist.

11. Messvorrichtung (120) nach Anspruch 10, bei der das äußere Ende (133a) des Skalenabschnittes weiter vorn als das innere Ende (133b) des Skalenabschnittes auf der Vorderseite der Anzeigescheibe (121) positioniert ist.

12. Messvorrichtung (120) nach einem der Ansprüche 2 bis 11, bei der der Zeiger (122) aus einem lichtleitenden Material gebildet wird, um Licht von der Lichtquelle (151) oder einer weiteren Lichtquelle (152) zu leiten.

13. Messvorrichtung (120) nach einem der vorhergehenden Ansprüche, die außerdem aufweist:
einen äußeren Rahmen (140), der mindestens einen äußeren Abschnitt des Anzeigescheibenrahmens (130) umgibt, wobei der äußere Rahmen (140) behandelt ist, um Licht zu reflektieren.

14. Messvorrichtung (120) nach einem der vorhergehenden Ansprüche, bei der die Messvorrichtung (120) mit einer anderen Messvorrichtung nebeneinander angeordnet ist und die andere Messvorrichtung nicht einen Anzeigescheibenrahmen umfasst.

15. Fahrzeug (10), das eine Messvorrichtung (120) nach einem der Ansprüche 1 bis 14 aufweist.

## Revendications

1. Dispositif de compteur (120), comprenant :
une plaque d'indication (121) comportant une surface d'indication (121a) indiquant des informations concernant une valeur mesurée ;
une source de lumière (151) ; et
un cadre de la plaque d'indication (130), destiné à entourer au moins une partie d'une partie de rebord (121d) de la plaque d'indication (121) ;
le cadre de la plaque d'indication (130) étant au moins en partie formée à partir d'un matériau de guidage de la lumière pour guider la lumière à partir de la source de lumière (151) ; et
le cadre de la plaque d'indication (130) débordant au-dessus de la surface d'indication (121a), d'un côté arrière de la plaque d'indication (121) vers un côté avant de celle-ci.

2. Dispositif de compteur (120) selon la revendication 1, comprenant en outre un doigt (122) adapté pour se déplacer dans une zone située au-dessus de la surface d'indication (121a) de la plaque d'indication (121).

3. Dispositif de compteur (120) selon les revendications 1 ou 2, comprenant en outre une section d'échelle en saillie (133, 134), débordant du cadre de la plaque d'indication (130) vers le côté avant de la plaque d'indication (121), la section d'échelle en saillie (133, 134) étant formée au niveau d'une position spécifique correspondant à la valeur mesurée.

4. Dispositif de compteur (120) selon la revendication 3, dans lequel la section d'échelle en saillie (133, 134) déborde vers l'intérieur à partir de la partie de rebord (121d) de la plaque d'indication (121).

5. Dispositif de compteur (120) selon les revendications 3 ou 4, comprenant plusieurs sections d'échelle en saillie (133, 134), au moins une section d'échelle en saillie (134) étant formée au niveau d'une position correspondant à une valeur de référence de la valeur mesurée.

6. Dispositif de compteur (120) selon la revendication 5, dans lequel la au moins une section d'échelle en saillie (134) formée au niveau d'une position correspondant à une valeur de référence de la valeur mesurée a une taille différente des autres sections d'échelle en saillie (133).

7. Dispositif de compteur (120) selon les revendications 5 ou 6, dans lequel la au moins une section d'échelle en saillie (134) formée au niveau d'une position correspondant à une valeur de référence de la valeur mesurée est plus grande que les autres sections d'échelle en saillie (133).

8. Dispositif de compteur (120) selon l'une quelconque des revendications précédentes, dans lequel le cadre de la plaque d'indication (130) englobe :
une extrémité interne du cadre (132b), formée sur le côté de la partie de rebord ;
une extrémité externe du cadre (132a), formée vers l'extérieur de l'extrémité interne du cadre (132b) ; et
une section d'inclinaison du cadre (132c), formée entre l'extrémité interne du cadre (132b) et l'extrémité externe du cadre (132a).

9. Dispositif de compteur (120) selon la revendication 8, dans lequel l'extrémité externe du cadre (132a) est positionnée plus vers l'avant que l'extrémité interne du cadre (132b) sur le côté avant de la plaque d'indication (121).

10. Dispositif de compteur (120) selon l'une quelconque des revendications 3 à 9, dans lequel chaque section d'échelle en saillie (133, 134) englobe ;
une extrémité interne de la section d'échelle (133b), formée sur le côté de la partie de rebord ;
une extrémité externe de la section d'échelle (133a), formée vers l'extérieur de l'extrémité interne de la section d'échelle (133b) ; et
une partie d'inclinaison de la section d'échelle (133c), formée entre l'extrémité interne de la section d'échelle (133b) et l'extrémité externe de la section d'échelle (133a).

11. Dispositif de compteur (120) selon la revendication 10, dans lequel l'extrémité externe de la section d'échelle (133a) est positionnée plus vers l'avant que l'extrémité interne de la section d'échelle (133b) sur le côté avant de la plaque d'indication (121).

12. Dispositif de compteur (120) selon l'une quelconque des revendications 2 à 11, dans lequel le doigt (122) est formé à partir d'un matériau de guidage de la lumière, pour guider la lumière à partir de la source de lumière (151) ou à partir d'une autre source de lumière (152).

13. Dispositif de compteur (120) selon l'une quelconque des revendications précédentes, comprenant en outre :
un cadre externe (140) entourant au moins une partie externe du cadre de la plaque d'indication (130), le cadre externe (140) étant traité en vue de réfléchir la lumière.

14. Dispositif de compteur (120) selon l'une quelconque des revendications précédentes, dans lequel le dispositif de compteur (120) est juxtaposé à un autre dispositif de compteur, l'autre dispositif de compteur n'englobant pas de cadre de la plaque d'indication.

15. Véhicule (10) comprenant un dispositif de compteur (120) selon l'une quelconque des revendications 1 à 14.
